# EUROPEAN PATENT APPLICATION

(11) **EP 2 568 577 A2**
(43) Date of publication of application: **13.03.2013**
(21) Application number: 12181584.9
(22) Date of filing: 23.08.2012
(51) Int. Cl.: H02K 1/27

(54) **Brushless DC electric motor**

(30) Priority: 10.09.2011 JP 2011197734
(71) Applicant: Nidec Servo Corporation, Kiryu-city, Gumma 376-0011 (JP)
(72) Inventor: Jin, Motoi, Gumma, 376-0011 (JP); Kato, Takaya, Gumma, 376-0011 (JP); Sekiguchi, Osamu, Gumma, 376-0011 (JP); Oiwa, Shoji, Gumma, 376-0011 (JP)
(74) Representative: Schenk, Markus

(57) **Abstract**

A brushless DC motor including a rotor capable of minimizing demagnetization of a magnet even when a short-circuit brake operation is performed by short-circuiting motor coils includes two kinds magnets differing in coercive force from each other which are alternately arranged into an annular shape along a circumferential direction. A magnet having a high coercive force is arranged in the portion where a diamagnetic flux is strongly generated. The portion where a diamagnetic flux is generated is the salient pole portion of a stator. A counter electromotive force becomes greatest when the center of the salient pole portion of the stator comes closer to the border of an N-pole and an S-pole of the magnet. Since the diamagnetic flux has a maximum value in that position, the magnet having a high coercive force is arranged near the border of an N-pole and an S-pole.

## Description

### BACKGROUND OF THE INVENTION

### 1. Field of the Invention

The present invention relates to a brushless DC motor using a magnet as a rotor and, more specifically, to an improvement in a rotor of a motor which ameliorates the demagnetization phenomenon of a magnet which may occur during a short-circuit brake operation performed by short-circuiting coils of the motor.

### 2. Description of the Related Art

In recent years, in the field of fans and blowers, blades tend to be rotated at a high speed to improve the flow rate-static pressure characteristics. On the other hand, it is sometimes required for the sake of safety that the blades be stopped within a short time period when power is cut off. In this case, a short-circuit brake method for generating brake torque through the use of a counter electromotive force of a motor by short-circuiting coil terminals of the motor is employed in order to stop the motor within a short time period during which a motor drive circuit is operated after power cutoff.

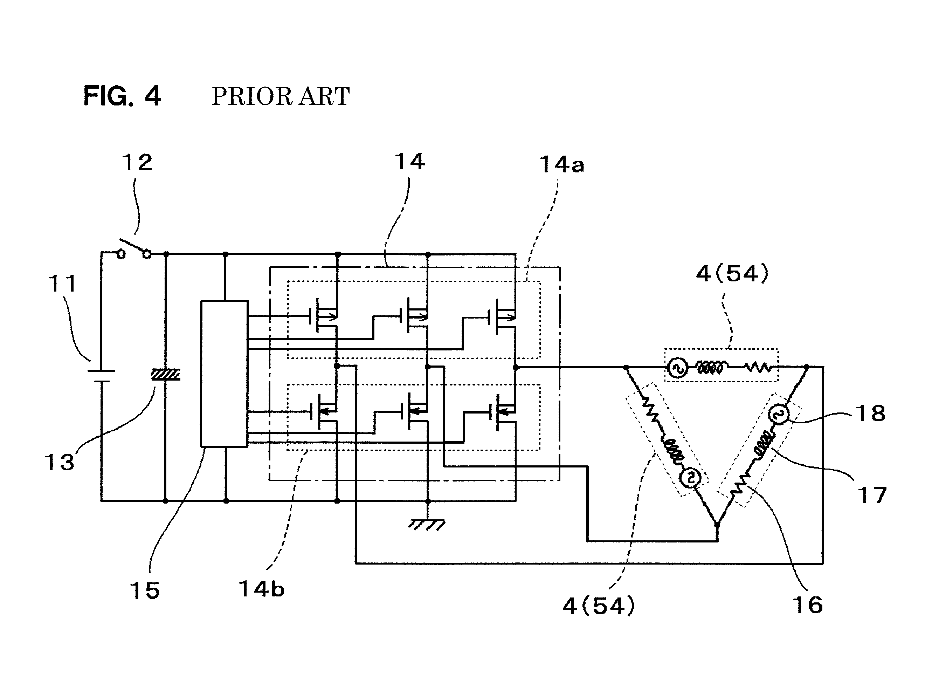

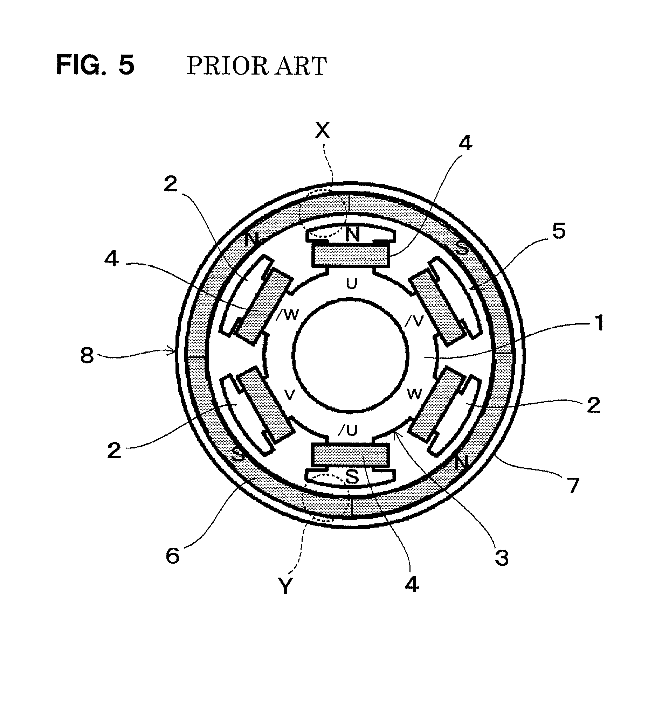

Fig. 4 is a schematic connection diagram showing a conventional fan motor drive circuit extensively used at the present time. The fan motor is made up of a three-phase brushless DC motor and is configured as shown in Fig. 5. More specifically, the fan motor includes a stator 5 and a rotor 8. The stator 5 includes a stator core 3, which has an annular core 1 and six salient poles 2 arranged on the outer circumference of the core 1 at a regular interval, and a plurality of three-phase coils 4 wound on the salient poles 2. The rotor 8 surrounds the stator 5 and includes an annular magnet 6 opposed to the salient poles 2 across a narrow space and an annular rotor yoke 7 for holding the magnet 6. The magnet 6 is made up of, e.g., an annular ferrite-based bonded magnet, and is magnetized into four poles so that four magnetic poles having an equal pole width can be arranged at a regular interval with the alternation of N-poles and S-poles. The rotor 8 has a rotating shaft formed of a single piece in the rotation center position thereof. The rotating shaft is rotatably supported by bearings not shown in the drawings in a concentric relationship with the stator 5.

Referring again to Fig. 4, if a switch 12 connected to a power source 11 is turned on, a capacitor 13 is charged and a source voltage is applied to an inverter circuit 14 and a transistor drive circuit unit 15 for controlling transistor groups of the inverter circuit 14. The inverter circuit 14 includes an upper-arm transistor group 14a and a lower-arm transistor group 14b. The respective terminals of delta-connected motor coils 4 are connected between the respective phases of the upper-arm transistor group 14a and the lower-arm transistor group 14b. The transistor drive circuit unit 15 supplied with electric power upon turning on the switch 12 drives and controls the transistor groups 14a and 14b. The transistor groups 14a and 14b of the inverter circuit 14 are sequentially controlled to turn on and off on a phase-by-phase basis, whereby the supply of electric power to the three-phase coils 4 is performed in sequence. As a result of sequential excitation of the three-phase coils 4, torque is generated in the rotor 8 by the electromagnetic interaction between the magnetized salient poles 2 of the respective phases and the magnet 6. Thus, the rotor 8 rotates. In Fig. 4, the coils 4 are equivalently shown as a serial circuit of an internal resistance 16, an inductance 17, and a counter electromotive force 18.

In this regard, if the power source 11 is cut off by turning off the switch 12 during rotation of the rotor, the transistor drive circuit unit 15 is continuously operated only for a short time period by using the electric charges accumulated in the capacitor 13. During this operation time period, the transistor drive circuit unit 15 performs an operation to turn off the three-phase upper-arm transistor group 14a of the inverter circuit 14 and to turn on the lower-arm transistor group 14b. The three-phase motor coils 4 are kept short-circuited by the lower-arm transistor group 14b. Since the rotor 8 is rotating, a large counter electromotive force 18 is generated in the motor coils 4 of the respective phases as shown in Fig. 4. Thus, a large short-circuiting current is supplied to the respective motor coils 4 to generate brake torque. Consequently, it is possible to stop the rotor 8 within a short time period (namely, within a time period during which electric charges are left in the capacitor 13 and the transistor drive circuit unit 15 is in operation).

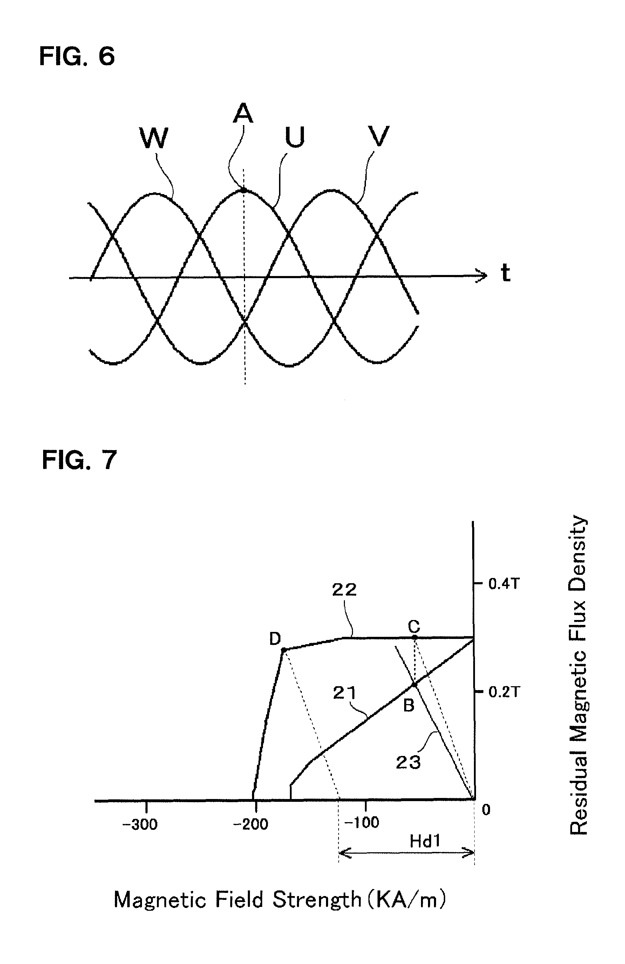

In the conventional short-circuiting operation described above, however, a strong diamagnetic field is applied from the salient poles 2 of the stator 3 wound with the coils 4 to the magnet 6 of the rotor 8 opposed to the salient poles 2. Fig. 6 shows the waveforms of counter electromotive forces of the three-phase coils 4 immediately after power cutoff. The point A in Fig. 6 is a position where a U-phase counter electromotive force becomes greatest. The positional relationship between the magnetic position of the magnet 6 and the salient poles 2 shown in Fig. 5 is the one available at the point A. The U-phase salient pole 2 is exited into an N-pole. The /U-phase salient pole 2 is exited into a S-pole. The U-phase salient pole 2 and the N magnetic pole of the magnet 6 are opposed to each other with the same pole in the position of a region X. The /U-phase salient pole 2 and the S magnetic pole of the magnet 6 are opposed to each other with the same pole in the position of a region Y.

Fig. 7 is a demagnetization curve representing the characteristics of a ferrite-based bonded magnet. Reference symbol 21 designates a B-H curve of the bonded magnet, reference symbol 22 designates a 4nI-H curve of the bonded magnet, and reference symbol 23 designates a permeance modulus of a magnetic circuit. As can be calculated from the intersection point (point B) between the B-H curve 21 and the permeance modulus 23, the marginal demagnetizing field strength Hd1 at the time of generation of demagnetization is about 120 KA/m. In other words, if the permeance modulus during the course of using the magnet is the one designated by reference symbol 23 in Fig. 7, the magnet is operated with the magnetic flux density available at the intersection point (point B) between the permeance modulus 23 and the B-H curve 21. The intersection point (point C) between the perpendicular line leading from the point B and the 4nI-H curve 22 indicates the magnetization intensity when the external magnetic field is zero. In case where the external magnetic field is applied in the opposite direction, the permeance modulus is considered to have been parallel-moved by the external magnetic field. At this time, if the point C is parallel-moved beyond the bent point (point D) of the 4nI-H curve 22, an irreversible change (namely, a demagnetization caused by the external magnetic field) is generated. Therefore, the magnetic field strength parallel-moved from the bent point (point D) becomes the marginal demagnetizing field strength Hd1, i.e., about 120 KA/m.

If the previous marginal demagnetizing field strength in the U-phase salient pole magnetized with an N-pole and the /U-phase salient pole magnetized with an S-pole exceeds Hd1, the magnetic pole portion of the magnet 6 lying in the opposite position is demagnetized.

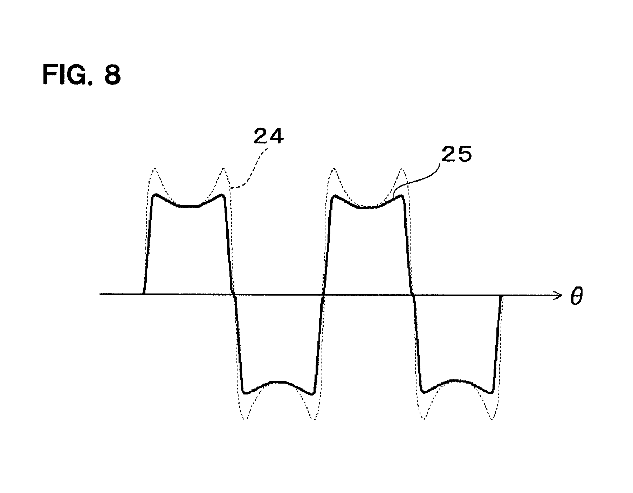

Fig. 8 shows the distribution of surface magnetic field densities on the inner circumferential surface of the magnet with respect to the circumferential angle θ of the magnet. Reference symbol 24 designates the distribution of surface magnetic field densities prior to demagnetization and reference symbol 25 designates the distribution of surface magnetic field densities at the time of generation of demagnetization. It can be seen that the demagnetization is generated near the borders of the N-poles and the S-poles of the four-pole magnet 6 and that no demagnetization is generated in the central portions of the magnetic poles.

A ferrite-based resin-bonded magnet for use in a motor will be demagnetized by the demagnetizing field greater in strength than the marginal demagnetizing field strength Hd decided by the magnetic circuit operating point. Thus, the bonded magnet cannot maintain the properties required in a fan motor. In this regard, as one method of restraining demagnetization by reducing a short-circuiting current, there is known a method of connecting resistors to the coils of the respective phases. It is also possible to form a current limiting circuit as is the case at the motor startup time. In either case, there are posed problems of a delayed brake stop time, an increased circuit size and an increased cost.

There is also available a method in which demagnetization is restrained by forming a magnet with a ferrite sintered material having a high coercive force. In a ring magnet, however, there exists a manufacturing constraint in terms of the radial dimension and thickness dimension thereof. It is often the case that a sintered material cannot be applied to a ring magnet having a low thickness. Moreover, there is available a method in which a magnet is split into segments. However, in this method, the steps of positioning and bonding the magnet segments are complex. The methods noted above are accompanied by a significant increase in cost.

### SUMMARY OF THE INVENTION

In view of the problems inherent in the prior art, the preferred embodiments of the present invention provide a brushless DC motor including a rotor capable of significantly reducing or eliminating a demagnetization of a magnet even when a short-circuit brake operation is performed by short-circuiting motor coils.

In accordance with a preferred embodiment of the present invention, two kinds magnets differing in coercive force from each other are alternately arranged into an annular shape along a circumferential direction. A magnet having a high coercive force is arranged in the portion where a diamagnetic flux is strongly generated. In other words, the portion where a diamagnetic flux is generated is the salient pole portion of a stator. A counter electromotive force becomes greatest when the center of the salient pole portion of the stator comes closer to the border of an N-pole and an S-pole of the magnet. Since the diamagnetic flux has a maximum value in that position, the magnet having a high coercive force is arranged near the border of an N-pole and an S-pole.

The magnet having a low coercive force preferably is a resin-bonded magnet. The magnet having a low coercive force preferably includes a plurality of magnetic pole portions arranged at a specified interval and a plurality of connecting portions arranged to interconnect the magnetic pole portions. The magnetic pole portions of the magnet element having a high coercive force are arranged between the magnetic pole portions of the magnet having a low coercive force. This makes it possible to easily position the magnet element having a high coercive force.

The preferred embodiments of the present invention provide superior features, as discussed in detail below, and can provide a rotor suitable for use in a fan/blower driving motor.

According to a preferred embodiment of the present invention, the magnet having a high coercive force is arranged only in the portion where a diamagnetic flux is strongly generated when coils are short-circuited. This makes it possible to minimize an increase in the material cost of the magnet.

Since the conventional circuit can be applied with no change in circuit configuration, the external appearance of the motor is not changed and the circuit cost is not increased.

A ferrite-based inexpensive resin-bonded magnet having a low coercive force is preferably used in a preferred embodiment of the present invention. The magnet having a low coercive force preferably includes a plurality of connecting portions arranged to interconnect a plurality of magnetic pole portions adjoining to each other. The magnet having a low coercive force is arranged to have a portion which positions the segment-shaped sintered magnet having a high coercive force. This helps enhance the workability.

The above and other elements, features, steps, characteristics and advantages of the present invention will become more apparent from the following detailed description of the preferred embodiments with reference to the attached drawings.

### BRIEF DESCRIPTION OF THE DRAWINGS

Fig. 1 is a plan section view showing a brushless DC motor according to a preferred embodiment of the present invention.

Figs. 2A and 2B are developed views of a magnet of the brushless DC motor shown in Fig. 1, Fig. 2A illustrating a pre-magnetization state (non-magnetized state) and Fig. 2B illustrating a post-magnetization state.

Fig. 3 is a characteristic diagram representing a demagnetization curve of the magnet shown in Figs. 2A and 2B.

Fig. 4 is a schematic connection diagram showing a conventional fan motor drive circuit.

Fig. 5 is a plan section view showing a conventional brushless DC motor.

Fig. 6 is a diagram showing the waveforms of counter electromotive forces in the respective phases immediately after cutting off the power of the brushless DC motor.

Fig. 7 is a characteristic diagram representing a demagnetization curve of the magnet shown in Fig. 5.

Fig. 8 is a waveform diagram showing the surface magnetic flux densities of the magnet shown in Fig. 5.

### DETAILED DESCRIPTION OF THE PREFERRED EMBODIMENTS

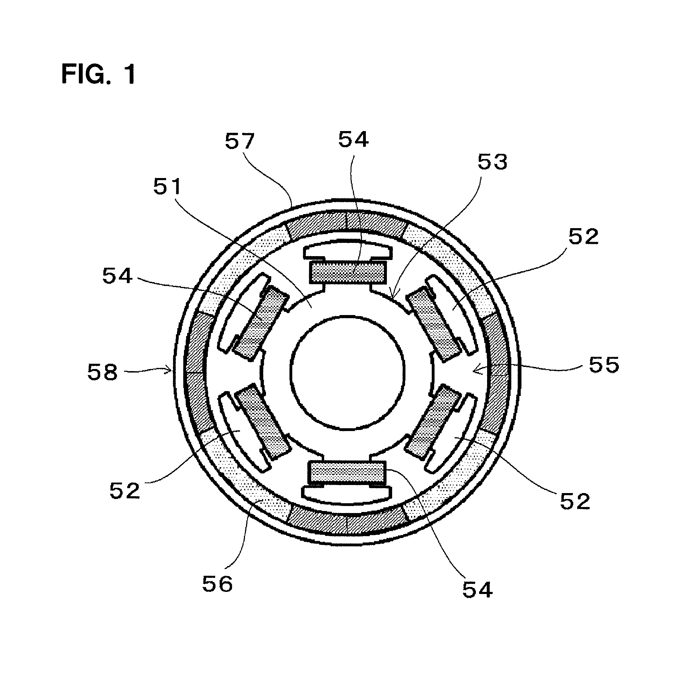

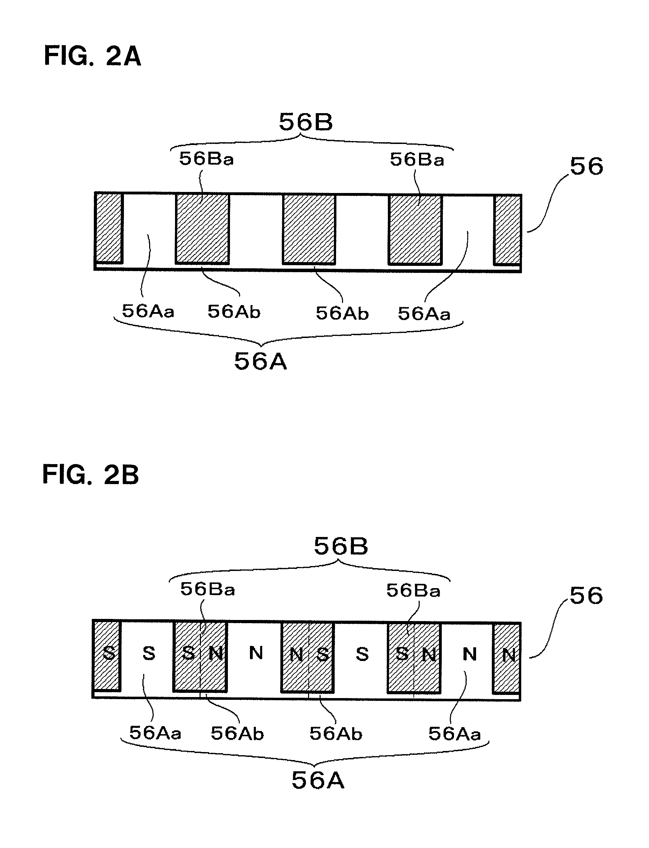

A preferred embodiment of a brushless DC motor in accordance with the present invention will now be described with reference to Figs. 1, 2A, and 2B. Fig. 1 is a section view of a brushless DC motor having three phases, four magnetic poles, and six salient poles. The brushless DC motor preferably includes a stator 55 and a rotor 58. The stator 55 preferably includes a stator core 53, which has an annular core-back 51, and six salient poles 52 arranged on the outer circumference of the core-back 51 at a regular interval, and a plurality of three-phase coils 54 wound on the salient poles 52. The rotor 58 is arranged to surround the stator 55 and preferably includes an annular magnet 56 opposed to the salient poles 52 across a narrow space and an annular rotor yoke 57 arranged to hold the magnet 56. The rotor 58 preferably includes a rotating shaft provided with the rotor 58 as a single monolithic member in a rotational center position thereof. The rotating shaft is rotatably supported by bearings (not shown in the drawings) in a concentric relationship with the stator 55.

The magnet 56 included in the rotor 58 preferably is an annular ferrite-based magnet. Unlike the conventional one, the magnet 56 is produced by combining two kinds of magnet elements differing in coercive force from each other. Figs. 2A and 2B show the magnet 56 in a linearly developed state, with Fig. 2A illustrating the non-magnetized magnet 56 and Fig. 2B illustrating the magnetized magnet 56. The magnet 56 preferably includes: a first magnet element 56A provided by a ferrite-based resin-bonded magnet having a low coercive force, the first magnet element 56A preferably including four first magnetic poles 56Aa each preferably having an angular width equal to approximately 1/8 of the total perimeter (about 45 degrees), the first magnetic poles 56Aa arranged at a regular interval (of about 90 degrees), the first magnet element 56A further including connecting portions 56Ab arranged to annularly interconnect the end edges of the first magnetic poles 56Aa adjoining to each other; and a second magnet element 56B including four segment shaped second magnetic poles 56Ba provided by a ferrite-based sintered magnet having a high coercive force, each of the second magnetic poles 56Ba preferably having an angular width equal to or approximately 1/8 of the total perimeter (about 45 degrees), the second magnetic poles 56Ba interposed between the first magnetic poles 56Aa of the first magnet element 56A.

In a non-magnetized state, the first and second magnet elements 56A and 56B are provided in two kinds of annular shapes differing in coercive force before a magnetization step by arranging the second magnetic poles 56Ba as segment magnets between the adjoining first magnetic poles 56Aa and bonding the first magnetic poles 56Aa and the second magnetic poles 56Ba together preferably through the use of, for example, an adhesive agent. Next, the annular magnet 56 is magnetized so that the inner circumferential surfaces of the first magnetic poles 56Aa of the first magnet element 56A can be alternately magnetized with an N-pole and an S-pole. At this time, each of the ferrite-based sintered segment magnets with a high coercive force arranged in the borders of the N-poles and the S-poles of the first magnetic poles 56Aa is magnetized with an N-pole and an S-pole using the central portion thereof as a border. Accordingly, as shown in Fig. 2B, the N-poles of the magnet 56 are provided by the first magnetic poles 56Aa of the first magnet element 56A with a low coercive force and the adjoining one-half regions of the second magnetic poles 56Ba of the second magnet element 56B with a high coercive force arranged at the opposite sides of the first magnetic poles 56Aa. Similarly, the S-poles of the magnet 56 are provided by the first magnetic poles 56Aa of the first magnet element 56A with a low coercive force and the adjoining one-half regions of the second magnetic poles 56Ba of the second magnet element 56B with a high coercive force arranged at the opposite sides of the first magnetic poles 56Aa. The border lines of the N-poles and the S-poles are arranged at the centers of the second magnetic poles 56Ba with a high coercive force.

The rotating operation of the brushless DC motor, which includes the rotor 58 provided with the magnet 56 configured as above, is preferably performed by a drive circuit, such as, for example, the drive circuit shown in Fig. 4. If a short-circuit brake operation is performed by turning off a switch 12 during rotation of the rotor 58, the lower-arm transistor group 14b of an inverter circuit 14 is turned on, thereby short-circuiting the three-phase coils 54 and applying electromagnetic brake. As set forth above, the diamagnetic field acting from the salient poles 52 of the stator 53 wound with the motor coils 54 toward the magnet 56 of the rotor 58 during the brake operation which short-circuits the motor coils 54 becomes greatest near a border line between the N-pole and the S-pole. In the preferred embodiment described above, the second magnetic poles 56Ba of the second magnet element 56B with a high coercive force are arranged in the border portions between N-poles and the S-poles of the magnet 56. As a result, there is no possibility or substantially no possibility that the marginal demagnetizing field strength of the second magnet element 56B with a high coercive force exceeds Hd. This eliminates or substantially eliminates the possibility that the magnet portions will be demagnetized.

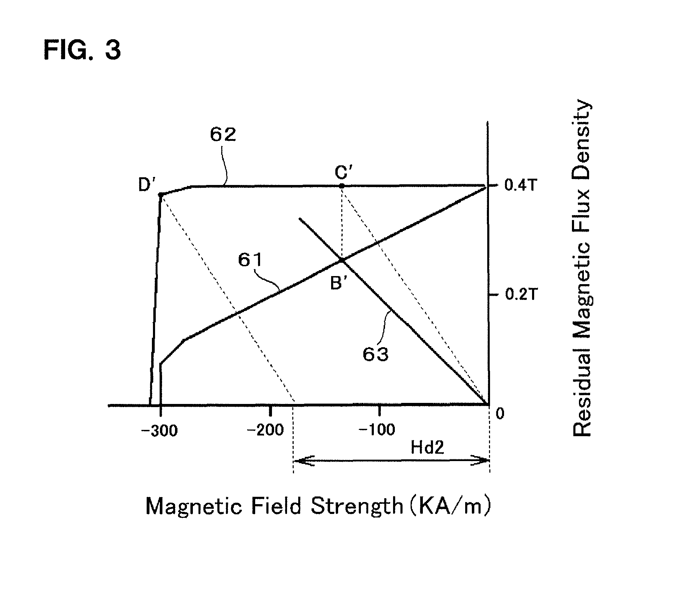

Fig. 3 is a demagnetization curve representing the characteristics of the ferrite-based sintered magnet element 56B with a high coercive force. Reference symbol 61 designates a B-H curve of the sintered magnet, reference symbol 62 designates a 4nI-H curve of the sintered magnet and reference symbol 63 designates a permeance modulus of a magnetic circuit. The permeance modulus 63 is found. Based on the magnet operating point, i.e., the intersection point (point B') between the B-H curve 21 and the permeance modulus 63, an intersection point (point C') between the perpendicular line leading from the point B' and the 4nI-H curve 62 is found. The magnetization intensity when the external magnetic field is zero is obtained. In case where the external magnetic field is applied in the opposite direction, the marginal demagnetizing field strength Hd2 at the time of generation of demagnetization is the magnetic field strength when parallel-moved to the bent point (point D') of the 4nI-H curve 62. Therefore, the marginal demagnetizing field strength Hd2 at the time of generation of demagnetization preferably is about 180 KA/m, for example. Since the marginal demagnetizing field strength Hd1 of the conventional ferrite-based resin-bonded magnet with a low coercive force preferably is about 120 KA/m, it is possible to obtain a margin of about 50%, for example.

With the preferred embodiments described above, the demagnetization of the magnet attributable to the diamagnetic field of the motor coils generated when short-circuiting the coil terminals and stopping the fast-rotating brushless DC motor for a fan can be prevented by the characteristic configuration of the magnet of the rotor. It is therefore possible to cope with the demagnetization of the magnet with a minimum increase of cost. Accordingly, the preferred embodiments of the present invention are very useful in the mass-produced fan motors.

While two kinds of magnets as the ferrite-based magnets differing in coercive force from each other have been described in the foregoing preferred embodiments, the present invention is not limited thereto. Regardless of a magnet material, other magnets may be equally applied as long as they have different coercive forces. In the foregoing preferred embodiments, the present invention has been described using an outer-rotor-type motor, but also can be applied to an inner-rotor-type motor.

While preferred embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. A brushless DC motor, comprising:
a stator including a plurality of main magnetic pole portions made of a soft-magnetic material and wound with motor coils and a plurality of salient pole portions arranged at tip ends of the main magnetic pole portions; and
a rotor including a magnet opposed to the salient pole portions of the stator across an air gap; wherein
the magnet is provided in an annular shape including two kinds of magnet elements differing in coercive force from each other including one magnetic element having a higher coercive force and one magnetic element having a lower coercive force that is lower than the higher coercive force, each of the magnet elements including a plurality of magnetic pole portions, the magnetic pole potions of the magnet elements are alternately arranged in a circumferential direction, and the magnetic pole portions of the magnet element having the higher coercive force are arranged near borders of an N-pole and an S-pole.

2. The motor of claim 1, wherein each of the borders of the N-pole and the S-pole of the magnet are arranged near a center of each of the magnetic pole portions of the magnet element having the higher coercive force.

3. The motor of claim 1, wherein a magnetic pole number of the magnet element having the higher coercive force is twice as great as a magnetic pole number of the magnet element having the lower coercive force.

4. The motor of claim 3, wherein each of the magnetic pole portions of the magnet element having the higher coercive force is magnetized with two poles such that each of the borders of the N-pole and the S-pole exists near a center of each of the magnetic pole portions of the magnet element having the higher coercive force, and each of the magnetic pole portions of the magnet element having the lower coercive force is magnetized with the same magnetic pole as the magnetic pole of the adjoining areas of the magnetic pole portions of the magnet element having the higher coercive force, the adjoining areas being positioned between each of the magnetic pole portions of the magnet element having the lower coercive force and the borders of the N-pole and the S-pole.

5. The motor of claim 4, wherein the magnet element having the higher coercive force and the magnet element having the lower coercive force are annularly connected to each other in a non-magnetized state such that the magnetic pole portions thereof are arranged alternately and then the magnetic pole portions of the magnet element having the lower coercive force are alternately magnetized with an N-pole and an S-pole such that each of the magnetic pole portions of the magnet element having the higher coercive force is magnetized with an N-pole and an S-pole using the center thereof as a border of the N-pole and the S-pole.

6. The motor of claim 1, wherein the magnet element having the lower coercive force includes a resin-bonded magnet and is arranged into an annular shape by the magnetic pole portions thereof arranged at a specified interval and a plurality of connecting portions arranged to interconnect the magnetic pole portions thereof adjoining to each other.

7. The motor of claim 6, wherein the connecting portions of the magnet element having the lower coercive force are arranged between axial end edges of the magnetic pole portions of the magnet element having the lower coercive force.

8. The motor of claim 7, wherein the magnet element having the higher coercive force includes a plurality of segment shaped sintered magnets, the sintered magnets being arranged between the magnetic pole portions of the magnet element having the lower coercive force, the sintered magnets being coupled to the magnetic pole portions of the bonded magnet and the connecting portions to define a single piece.

9. The motor of claim 8, wherein the magnet element having the higher coercive force includes a ferrite-based sintered magnet and the magnet element having the lower coercive force is made of a ferrite-based resin-bonded magnet.

10. The motor of claim 9, wherein the magnet element having the higher coercive force and the magnet element having the lower coercive force are annularly connected to each other in a non-magnetized state such that the magnetic pole portions thereof are arranged alternately, and the magnetic pole portions of the magnet element having the lower coercive force are alternately magnetized with an N-pole and an S-pole, whereby each of the magnetic pole portions of the magnet element having the higher coercive force is magnetized with an N-pole and an S-pole using the center thereof as a border of the N-pole and the S-pole.
